# DEMANDE DE BREVET EUROPEEN

(11) **EP 4 714 733 A1**
(43) Date de publication de la demande: **25.03.2026**
(21) Numéro de dépôt: 25202204.1
(22) Date de dépôt: 15.09.2025
(51) Int. Cl.: B60N 2/015, B60N 2/24, B60N 3/02, B61D 33/00, B61D 37/00

(54) **ARMATURE DE FIXATION D'ÉQUIPEMENTS MOBILIERS D'UN VÉHICULE DE TRANSPORT COLLECTIF ET VÉHICULE ÉQUIPÉ D'UNE TELLE ARMATURE**

(30) Priorité: 20.09.2024 FR 2410078
(71) Demandeur: SNCF Voyageurs, 93200 Saint-Denis (FR)
(72) Inventeur: DUMORTIER, Robert, 72000 LE MANS (FR); DUMORTIER, Anne-Laure, 72000 LE MANS (FR); DERMENGHEM, Maxime, 72650 LA BAZOGE (FR); EL AOUFI, Abdelhak, 72000 LE MANS (FR)
(74) Mandataire: Bringer IP

(57) **Abrégé**

Armature de fixation d'équipements mobiliers intérieurs (30, 32) dans un véhicule de transport collectif comprenant une caisse de transport des passagers reliée mécaniquement aux organes de roulement dudit véhicule, ladite armature (100) comprenant : une pluralité d'éléments (10, 12, 14, 20) d'armature ; des moyens de fixation (10a, 10b, 10c, 10d ; 12a, 12b, 12c ; 14a, 14b, 14c ; 20a) de chaque élément d'armature (10, 12, 14) de ladite pluralité d'éléments d'armature à ladite caisse dudit véhicule de transport ; des moyens de montage (32a, 32b) d'au moins un équipement mobilier (32) intérieur sur au moins un élément d'armature de ladite pluralité d'éléments d'armature.

## Description

### Domaine technique de l'invention

L'invention concerne une armature de fixation d'équipements mobiliers intérieurs d'un véhicule de transport de passagers et un véhicule de transport collectif, tel qu'un véhicule ferroviaire, équipé d'une telle armature.

### Arrière-plan technologique

Les aménagements intérieurs des véhicules de transport de passagers, tels que les véhicules ferroviaires, sont aujourd'hui figés lors de la construction du véhicule en fonction des besoins de chaque société d'exploitation de ces véhicules.

En effet, les équipements mobiliers intérieurs des véhicules de transport collectif tels que les bancs, les banquettes, les sièges, les tables, les rangements de bagages, etc. sont fixés directement à la structure de caisse du véhicule par le biais de moyens de fixation, du type inserts ou vis-écrou. Aussi, il est nécessaire de connaitre à l'avance l'agencement des équipements mobiliers intérieurs visé par la société d'exploitation du véhicule pour prévoir, lors de la fabrication de la caisse du véhicule, les points de fixation des équipements mobiliers dans la caisse du véhicule.

Dans le domaine ferroviaire, on désigne par « diagramme », l'organisation de l'espace intérieur du véhicule et la disposition des équipements mobiliers intérieurs. Le diagramme définit donc la distance entre les sièges, la disposition des tables le cas échéant, les zones de stockage des bagages le cas échéant, etc.

Ce diagramme définit donc aujourd'hui la position des points de fixation de chaque équipement de l'aménagement intérieur. Une fois la structure de caisse finalisée, chaque équipement est fixé de manière individuelle sur son point de fixation prédéfini directement sur la caisse du véhicule de transport.

L'inconvénient majeur de cette technique de montage des équipements intérieurs est qu'elle impose la pré-définition du diagramme du véhicule. Une fois le diagramme défini, ce dernier est « gelé » et la structure de caisse est fabriquée pour pouvoir mettre en œuvre le diagramme visé. En d'autres termes, la position des équipements est figée lors de la phase de conception pour la durée de vie du véhicule. Le diagramme et la structure de caisse du véhicule étant directement liés, cela oblige dans le planning de conception du véhicule de figer très tôt les diagrammes et donc de prendre des risques sur les besoins futurs.

Or, il n'est pas rare que le diagramme prédéfini pour une exploitation donnée ne soit pas compatible avec les besoins futurs d'autres exploitations. Toute modification des équipements intérieurs ou de leurs positions au sein du véhicule nécessite une modification des points de fixation existant si les points définis ne sont plus compatibles avec le nouveau diagramme.

Si un nouveau diagramme n'est pas compatible avec la structure initiale, il est nécessaire de reprendre la structure de caisse pour modifier les points de fixation ou créer de nouvelles interfaces spécifiques. Ainsi, toute adaptation durant la durée de vie du véhicule nécessite une immobilisation lourde et une requalification globale du véhicule. Cela limite l'adaptation aux besoins notamment par l'impact technique et économique de la modification de la rame. En outre, cela génère des couts très importants.

Les inventeurs ont donc cherché à proposer une solution alternative permettant de définir le diagramme d'un véhicule de transport de passagers (c'est-à-dire l'aménagement intérieur du véhicule) après la construction du véhicule sans immobilisation lourde et non uniquement lors de la conception du véhicule, tel que c'est le cas aujourd'hui.

### Objectifs de l'invention

L'invention vise à fournir une solution permettant de modifier le diagramme d'un véhicule de transport de passagers sans modification structurelle de la caisse du véhicule.

L'invention vise en particulier à fournir une solution permettant de modifier le diagramme sans modification des points de fixation prédéfinis dans la caisse du véhicule de transport.

L'invention vise aussi à fournir une solution permettant de dissocier la fixation des aménagements intérieurs des points de fixation sur la structure de caisse du véhicule de transport.

L'invention vise aussi à fournir un véhicule de transport collectif permettant une modification de l'agencement des équipements mobiliers intérieurs.

### Exposé de l'invention

Pour ce faire, l'invention concerne une armature de fixation d'équipements mobiliers intérieurs dans un véhicule de transport collectif comprenant une caisse de transport des passagers reliée mécaniquement aux organes de roulement dudit véhicule.

L'armature selon l'invention comprend :
- une pluralité d'éléments d'armature,
- des moyens de fixation de chaque élément d'armature de ladite pluralité d'éléments d'armature à ladite caisse dudit véhicule de transport,
- des moyens de montage d'au moins un équipement mobilier intérieur sur au moins un élément d'armature de ladite pluralité d'éléments d'armature.

Selon l'invention, ladite pluralité d'éléments d'armature comprend au moins une arche d'armature - de préférence une pluralité d'arches d'armature - et lesdits moyens de fixation de chaque arche d'armature comprennent au moins un organe de fixation configuré pour relier mécaniquement une portion latérale de l'arche d'armature et une paroi latérale de ladite caisse de transport et au moins un organe de fixation configuré pour relier mécaniquement une portion centrale de l'arche d'armature et le plafond de la caisse de transport.

L'invention permet ainsi de dissocier la fixation des équipements mobiliers intérieurs des points de fixation sur la caisse du véhicule. Pour ce faire, l'invention propose d'utiliser une structure additionnelle désignée par la terminologie « d'armature de fixation d'équipements mobiliers » qui est fixée à la caisse du véhicule et c'est cette structure additionnelle qui reçoit et maintient les équipements mobiliers.

Ainsi, le diagramme (la disposition des aménagements intérieurs) est dissocié des contraintes techniques dues à la caisse du véhicule, ce qui offre une grande liberté de positionnement des aménagements intérieurs, y compris après la fabrication de la caisse du véhicule. En effet, la liberté d'aménagement résulte de la possibilité de solidariser les mobiliers intérieurs sur l'armature de fixation et non directement à la caisse du véhicule.

En d'autres termes, les moyens de fixation de chaque élément d'armature de ladite pluralité d'éléments d'armature à la caisse du véhicule de transport peuvent être répartis sur la caisse selon une organisation prédéterminée immuable alors que la position et l'agencement des moyens de montage des équipements mobiliers intérieurs sur les éléments de structure peuvent être adaptés en fonction des besoins étant donné que ces derniers sont directement fixés sur l'armature de fixation.

Ainsi, la structure de caisse peut être équipée d'une même armature de fixation tout en permettant d'embarquer des équipements mobiliers intérieurs distincts et/ou répartis différemment à l'intérieur de la caisse. L'invention permet une grande modularité des véhicules de transport sans multiplier les points de fixations ou les rails de fixation sur la caisse du véhicule.

L'invention s'écarte ainsi des solutions antérieures en supprimant la fixation directe des équipements mobiliers sur la structure de caisse pour la remplacer par une fixation indirecte, par l'intermédiaire de l'armature, qui est une structure intérieure additionnelle fixée à la caisse. Les aménagements sont donc indépendants des points de fixation de la caisse contrairement aux solutions habituelles.

En outre et dans la mesure où la caisse du véhicule comprend une pluralité de points de fixation auxquels viennent se fixer les éléments d'armature, il est possible de ne conserver qu'un ou plusieurs éléments d'armatures en fonction des besoins. Le principe à la base de l'invention est de disposer d'une structure de caisse munie d'une pluralité de points de fixation et de fixer des éléments d'armature sur cette caisse. Les équipements mobiliers sont ensuite montés sur les éléments d'armature fixés à la caisse du véhicule de transport. On dispose donc de deux paramètres de configuration du diagramme : le choix des éléments d'armature à fixer à la caisse et le choix des équipements mobiliers montés sur les éléments d'armature fixés à la caisse.

Selon une variante avantageuse de l'invention, ladite pluralité d'éléments d'armature comprend au moins une arche d'armature - de préférence une pluralité d'arches d'armature - en forme de U inversé et lesdits moyens de fixation de chaque arche d'armature comprennent au moins un organe de fixation configuré pour relier mécaniquement une branche du U inversé de l'arche d'armature et une paroi latérale de ladite caisse de transport et au moins un organe de fixation configuré pour relier mécaniquement la portion centrale du U inversé et le plafond de ladite caisse de transport.

En d'autres termes, selon cette variante avantageuse, les éléments d'armature comprennent au moins une arche d'armature reliée à la caisse du véhicule par des organes de fixation qui viennent relier mécaniquement respectivement au moins une branche du U inversé de l'arche d'armature (de préférence chaque branche) et la partie centrale du U inversé. Ainsi, l'arche d'armature épouse la forme intérieure de la caisse du véhicule et est solidairement fixée à la caisse par les organes de fixation. Ces organes sont par exemple des moyens de fixation du type vis-écrou ou tout moyen équivalent. La forme du U inversé permet de bien intégrer l'arche dans la caisse du véhicule, d'être ouvert et discret.

Bien entendu, selon d'autres variantes, au moins un élément d'armature peut être une arche présentant une forme autre qu'un U inversé, tel qu'un assemblage de barres verticales et horizontales pour former un carré, un assemblage de barres obliques pour former un triangle, etc.

En variante ou en combinaison, ladite pluralité d'éléments d'armature comprend au moins une barre d'armature verticale - de préférence une pluralité de barre d'armature - et lesdits moyens de fixation de chaque barre d'armature comprennent au moins un organe de fixation configuré pour relier mécaniquement une extrémité de cette barre d'armature au plafond ou au sol de ladite caisse de transport.

Selon cette variante, les éléments d'armature comprennent au moins une barre verticale reliée à la caisse par des organes de fixation agencés respectivement et de préférence à chaque extrémité de la barre verticale.

De préférence, au moins une barre d'armature verticale - de préférence chaque barre d'armature verticale - est reliée mécaniquement à une arche d'armature par des moyens de boulonnerie ou tout moyen équivalent.

Cette variante avantageuse permet de former un squelette mécanique interne à la caisse de transport sur lequel les équipements mobiliers intérieurs sont fixés. Les liaisons mécaniques entre les arches et les barres verticales permettent une réparation uniforme des différents efforts.

Selon une variante avantageuse de l'invention, lesdits moyens de fixation de ladite pluralité d'éléments d'armature s'étendent selon des lignes parallèles agencées respectivement sur les parois latérales, le plancher et/ou le plafond de ladite caisse du véhicule.

Selon cette variante, les moyens de fixation (tels que les organes de fixation, par exemple des moyens de type vis-écrou) des éléments d'armature (tels que les arches et les barres verticales) s'étendent selon des lignes parallèles agencées respectivement sur les parois latérales de la caisse, sur le plancher et sur le plafond de la caisse de transport. En d'autres termes et selon cette variante, les points de fixation sur la caisse de transport suivent ces lignes de fixation. Il s'agit en outre des seules zones qui permettent la fixation d'un élément d'armature. Lors de la fabrication de la caisse de transport, il est donc prévu par exemple des taraudages filetés régulièrement répartis sur ces lignes de fixation de la caisse, ces taraudages étant destinés à recevoir les vis et les écrous qui permettent de relier mécaniquement les éléments d'armature à la caisse de transport.

Selon une variante avantageuse de l'invention, au moins un élément d'armature - de préférence chaque élément d'armature - est creux de manière à permettre le passage de câble de connexion électrique à l'intérieur de cet élément d'armature.

Cette variante avantageuse permet d'une part d'alléger les éléments d'armature et d'autre part de passer des câbles à l'intérieur des éléments d'armature. Ces câbles sont par exemple destinés à alimenter des prises USB, des prises électriques, des éclairages ou des écrans d'information portés par l'armature selon l'invention et/ou par les équipements mobiliers portés par l'armature selon l'invention.

Selon une variante avantageuse de l'invention, les moyens de montage d'au moins un équipement mobilier intérieur sur au moins un élément d'armature comprennent au moins une pince configurée pour enserrer une portion de l'élément d'armature, ladite pince portant en outre un organe de liaison mécanique audit élément mobilier.

En d'autres termes et selon cette variante, un équipement mobilier intérieur est monté sur un ou plusieurs éléments d'armature par l'intermédiaire de pinces configurées pour venir serrées une arche ou une barre verticale par vissage. Par exemple, les vis peuvent être agencées de part et d'autre de l'arche ou de la barre verticale et venir relier mécaniquement les deux éléments formant la pince de serrage ou traverser l'arche ou la barre verticale. D'autres moyens de montage peuvent être envisagés comme des attaches rapides excentriques ou des quarts de tour. Ces moyens de montage portent de préférence des organes de liaison permettant de relier mécaniquement un équipement mobilier à l'élément d'armature correspondant.

Selon une variante avantageuse de l'invention, au moins un élément d'armature est formé d'au moins un tube dont la section présente un diamètre maximum de 40 mm de manière à pouvoir faire office de barre de préhension pour un passager.

Cette variante avantageuse permet de conférer à chaque élément d'armature dont la section présente un diamètre maximum de 40 mm une fonction additionnelle de moyen de préhension pour un passager. Ainsi, cet élément d'armature permet non seulement de fixer un ou plusieurs équipements mobiliers à la caisse du véhicule, mais également d'être saisi par un passager, par exemple stationné en position debout, pour l'aider à se stabiliser lors des déplacements du véhicule de transport.

Selon une variante de l'invention, les arches d'armature présentent une section 60x30mm et les barres verticales présentent une section de diamètre maximum de 40mm.

La section des éléments d'armature peut être carrée, ronde, etc.

L'invention concerne aussi un véhicule de transport collectif comprenant une caisse de transport de passagers reliée mécaniquement aux organes de roulement dudit véhicule, caractérisé en ce qu'il comprend une armature de fixation d'équipements mobiliers intérieurs selon l'invention formant une interface de liaison mécanique entre lesdits équipements mobiliers et ladite caisse dudit véhicule.

Les avantages et effets techniques de l'armature selon l'invention s'appliquent *mutatis mutandis* au véhicule de transport selon l'invention.

### Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective d'une armature selon un mode de réalisation de l'invention portant une pluralité d'équipements mobiliers intérieurs,
- la figure 2 est une vue schématique d'une caisse d'un véhicule de transport destinée à recevoir une armature selon l'invention,
- la figure 3 est une vue schématique des moyens de montage d'un équipement mobilier intérieur sur un élément d'armature d'une armature selon un mode de réalisation de l'invention,
- la figure 4 est une vue schématique d'une armature selon un mode de réalisation de l'invention portant une première configuration d'équipements mobiliers intérieurs,
- la figure 5 est une vue schématique de l'armature de la figure 4 portant une deuxième configuration d'équipements mobiliers intérieurs.

### Description détaillée d'un mode de réalisation de l'invention

Sur les figures, les échelles et les proportions ne sont pas strictement respectées, et ce, à des fins d'illustration et de clarté.

Les éléments identiques, similaires ou analogues, sont désignés par les mêmes références dans toutes les figures.

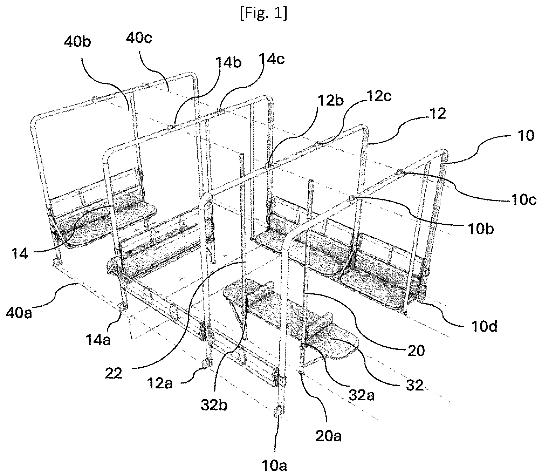

La figure 1 illustre une armature de fixation d'une pluralité d'équipements mobiliers intérieurs tels que des bancs et des banquettes dans un véhicule de transport collectif tel qu'un train de transport de voyageurs.

Cette armature de fixation est formée d'une pluralité d'éléments d'armature comprenant des arches d'armatures 10, 12, 14 et des barres verticales d'armature, 20, 22. À des fins de clarté sur les figures, seules quelques arches et quelques barres verticales sont référencées sur les figures.

Ces éléments d'armature (arches et barres) peuvent être formés en acier, en aluminium, en mousse d'aluminium ou en matériau composite tel que la fibre de carbone par exemple.

De préférence, les barres verticales sont reliées mécaniquement aux arches d'armature par des éléments de boulonnerie non représentés sur les figures à des fins de clarté.

Par exemple, la barre verticale 20 de la figure 1 est reliée mécaniquement à l'arche 10 au niveau de la portion centrale de l'arche 10.

Chaque élément d'armature est relié mécaniquement à la caisse du véhicule par des moyens de fixation. À titre d'exemple et tel qu'illustré sur la figure 1, l'arche d'armature 10 est reliée à la caisse du véhicule par des organes de fixation 10a, 10b, 10c, 10d. L'organe de fixation 10a permet de relier l'arche 10 à une paroi latérale de la caisse du véhicule, l'organe de fixation 10d permet de relier l'arche 10 à la paroi latérale opposée et les organes de fixation 10b, 10c permettent de relier l'arche 10 à la paroi supérieure (le plafond) de la caisse du véhicule de transport.

Bien entendu, d'autres agencements des organes de fixation sont possibles. Par exemple, ces organes de fixation peuvent relier l'élément d'armature au sol et/ou au plafond et/ou aux parois latérales.

À titre d'exemple toujours, la barre verticale 20 est reliée au plancher de la caisse par un organe de fixation 20a.

Ces organes de fixation peuvent être de tous types. Il s'agit par exemple de moyens de type vis-écrou conformés à des taraudages filetés ménagés dans la caisse du véhicule de transport.

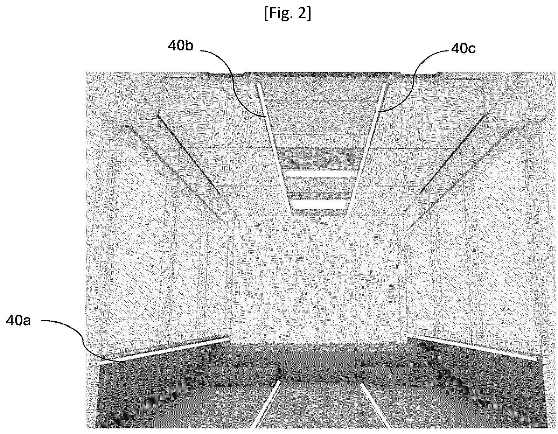

Selon un mode préférentiel de réalisation et tel que représenté sur les figures et notamment sur la figure 2, les différents organes de fixation des éléments d'armature sur la caisse du véhicule s'étendent de préférence sur des lignes parallèles 40a, 40b, 40c agencées respectivement sur le sol, les parois et le plafond de la caisse du véhicule de transport.

L'armature comprend en outre des moyens de montage des équipements mobiliers sur l'armature. Ainsi et à titre d'exemple, comme représenté sur la figure 1, la banquette 32 est montée sur les barres verticales 20, 22 de l'armature par les moyens de montage 32a, 32b.

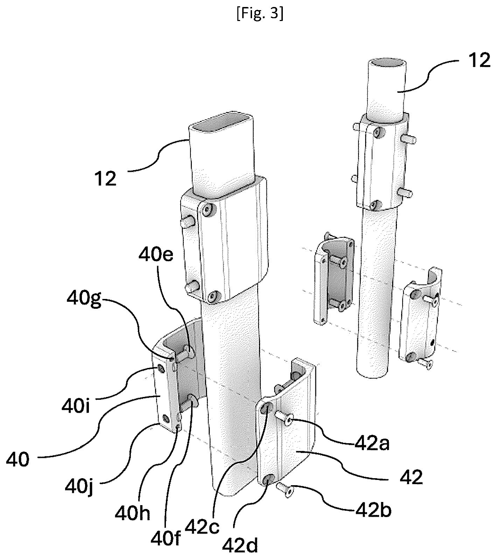

La figure 3 illustre un exemple de réalisation de ces moyens de montage 32a, 32b.

À gauche de la figure 3 sont représentés des moyens de montage destinés à équiper une arche d'armature 12 (dont seule une portion est représentée) dont la section droite est ovale. Ces moyens de montage comprennent deux platines 40, 42 conformées au tube de l'arche 12 de manière à pouvoir enserrer le tube de l'arche 12. Ces deux platines 40, 42 sont ensuite solidarisées l'une à l'autre par des vis 42a, 42b. Les platines 40, 42 sont identiques, mais pivotées l'une par rapport à l'autre de telle sorte que les moyens de vissage de l'une des platines viennent en prise avec les trous filetés de l'autre platine et vis versa.

En particulier et tel que représenté sur la figure 3, la platine 42 comprend des alésages 42c, 42d dans lesquels les vis 42a, 42b peuvent être insérées pour venir en prise dans des trous filetés 40g, 40h ménagés dans la platine 40. La platine 40 comprend également des alésages identiques aux alésages 42c, 42d de la platine 42, mais non visibles sur la figure car agencés derrière le tube 12. Ces alésages sont également associés à des vis non visibles sur la figure.

En outre, la platine 40 comprend des alésages 40i, 40j dans lesquels des vis 40e 40f peuvent être agencées pour s'étendre à travers la platine 40 et former des moyens auxquels fixer un équipement mobilier intérieur par vissage d'un écrou. Sur la figure 3, les moyens de montage sont représentés en perspective assemblée (au-dessus) et en perspective éclatée (en dessous). Une fois assemblée, les vis 40e, 40f sont prêtes à recevoir un écrou pour monter un équipement sur l'élément d'armature correspondant.

À droite de la figure 3 sont représentés des moyens de montage destinés à équiper une barre verticale 10 (dont seule une portion est représentée) dont la section droite est circulaire. Ces moyens sont formés de deux platines identiques associées à des moyens de vissage. En outre et à l'instar des moyens de montage sur l'arche, chaque platine comprend un alésage destiné à laisser passer une vis pour fixer un équipement mobilier intérieur.

De préférence, chaque tube d'un élément d'armature est creux pour pouvoir y faire circuler un câble électrique d'alimentation d'un équipement dédié (prise électrique, prise USB, etc.).

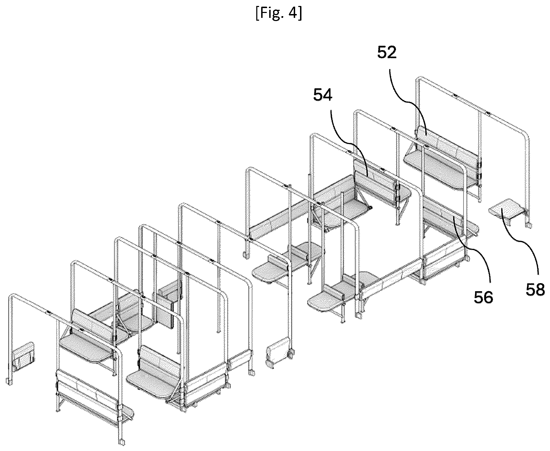

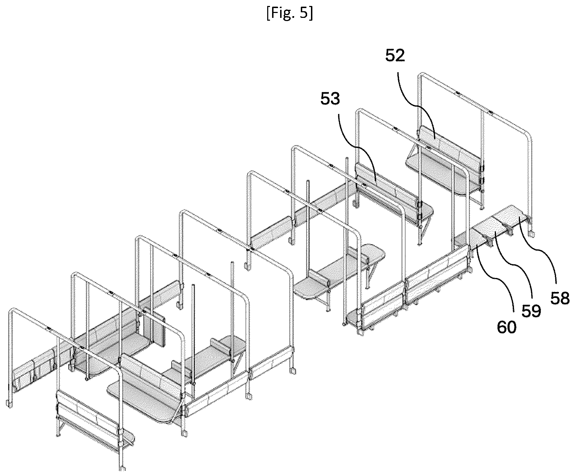

Les figures 4 et 5 illustrent une armature de fixation selon un mode de réalisation de l'invention comprenant plusieurs arches d'armature et plusieurs barres verticales d'armature. Les deux portions d'armature à droite des figures sont identiques et formées des mêmes arches d'armature et des mêmes barres verticales. Chaque élément d'armature est fixé à la caisse d'un véhicule de transport de passagers.

En revanche, les deux figures se distinguent l'une de l'autre par les équipements mobiliers portés par les deux armatures.

À titre d'exemple, la figure 4 illustre une armature dont la portion à droite de la figure porte une banquette 52 à trois places, deux banquettes 54, 56 agencées en regard et un siège à une place 58.

La figure 5 illustre la même armature dont la portion à droite de la figure porte la banquette 52 à trois places, et une banquette 53 à trois places et trois sièges à une place 58, 59, 60. Or la structure de l'armature sur cette zone de la caisse est strictement identique sur les deux figures.

En d'autres termes, la même armature permet de proposer différentes configurations d'aménagements intérieurs sans nécessiter de modifier la structure de caisse. Différents diagrammes sont possibles sans modification de la structure de caisse.

Le lecteur comprend en outre qu'il est possible de modifier l'armature, par exemple en supprimant certains éléments d'armature qui ne sont pas nécessaires dans le cadre du diagramme envisagé. C'est ce qui est représenté à gauche des figures 4 et 5. Les deux armatures sur les zones à gauche de la caisse ne sont pas identiques et diffèrent l'une de l'autre par le type, le nombre et l'agencement des arches d'armature et des barres verticales. Les points de fixation correspondant aux éléments d'armature non utilisés sur la structure de caisse ne sont alors plus utilisés. En revanche, on comprend que la structure de caisse est identique sur les deux figures.

## Revendications

1. Armature de fixation d'équipements mobiliers intérieurs (30, 32) dans un véhicule de transport collectif comprenant une caisse de transport des passagers reliée mécaniquement aux organes de roulement dudit véhicule, ladite armature (100) comprenant :
- une pluralité d'éléments (10, 12, 14, 20) d'armature,
- des moyens de fixation (10a, 10b, 10c, 10d ; 12a, 12b, 12c ; 14a, 14b, 14c ; 20a) de chaque élément d'armature (10, 12, 14) de ladite pluralité d'éléments d'armature à ladite caisse dudit véhicule de transport,
- des moyens de montage (32a, 32b) d'au moins un équipement mobilier (32) intérieur sur au moins un élément d'armature de ladite pluralité d'éléments d'armature.
**caractérisée en ce que** ladite pluralité d'éléments d'armature comprend au moins une arche d'armature (10, 12, 14) - de préférence une pluralité d'arches d'armature - et **en ce que** lesdits moyens de fixation de chaque arche d'armature comprennent au moins un organe de fixation configuré pour relier mécaniquement une portion latérale de l'arche d'armature et une paroi latérale de ladite caisse de transport et au moins un organe de fixation configuré pour relier mécaniquement une portion centrale de l'arche d'armature et le plafond de la caisse de transport.

2. Armature selon la revendication 1, **caractérisée en ce que** ladite pluralité d'éléments d'armature comprend au moins une arche d'armature (10, 12, 14) - de préférence une pluralité d'arches d'armature - en forme de U inversé et **en ce que** lesdits moyens de fixation de chaque arche d'armature (10, 12, 14) comprennent au moins un organe de fixation configuré pour relier mécaniquement une branche du U inversé de l'arche d'armature (10, 12, 14) et une paroi latérale de ladite caisse de transport et au moins un organe de fixation configuré pour relier mécaniquement la portion centrale du U inversé et le plafond de la caisse de transport.

3. Armature selon l'une des revendications 1 ou 2, **caractérisée en ce que** ladite pluralité d'éléments d'armature comprend au moins une barre d'armature verticale (20) - de préférence une pluralité de barre d'armature - et **en ce que** lesdits moyens de fixation de chaque barre d'armature (20) comprennent au moins un organe de fixation configuré pour relier mécaniquement une extrémité de cette barre d'armature au plafond ou au sol de ladite caisse de transport.

4. Armature selon la revendication 3, caractérisée en qu'au moins une barre d'armature verticale (20) est reliée mécaniquement à une arche d'armature (10) par des moyens de boulonnerie ou tout moyen équivalent.

5. Armature selon l'une des revendications 1 à 4, **caractérisée en ce que** lesdits moyens de fixation de ladite pluralité d'éléments d'armature s'étendent selon des lignes parallèles (40a, 40b, 40c) agencées respectivement sur les parois latérales, le plancher et/ou le plafond de ladite caisse de transport du véhicule.

6. Armature selon l'une des revendications 1 à 5, **caractérisée en ce qu'**au moins un élément d'armature - de préférence chaque élément d'armature - est creux de manière à permettre le passage de câble de connexion électrique à l'intérieur de cet élément d'armature.

7. Armature selon l'une des revendications 1 à 6, **caractérisée en ce que** lesdits moyens de montage d'au moins un équipement mobilier (32) intérieur sur au moins un élément d'armature (20) comprennent au moins une pince (40, 42) configurée pour enserrer une portion de l'élément d'armature, ladite pince portant en outre un organe de liaison (40e, 40f) mécanique audit équipement mobilier (32).

8. Armature selon l'une des revendications 1 à 7, **caractérisée en ce qu'**au moins un élément d'armature (12) est formé d'au moins un tube dont la section présente un diamètre maximum de 40 mm de manière à pouvoir faire office de barre de préhension pour un passager.

9. Véhicule de transport collectif comprenant une caisse de transport de passagers reliée mécaniquement aux organes de roulement dudit véhicule, **caractérisé en ce qu'**il comprend une armature de fixation d'équipements mobiliers intérieurs selon l'une des revendications 1 à 8 formant une interface de liaison mécanique entre lesdits équipements mobiliers et ladite caisse dudit véhicule.
